# EUROPEAN PATENT APPLICATION

(11) **EP 2 168 779 A2**
(43) Date of publication of application: **31.03.2010**
(21) Application number: 09171675.3
(22) Date of filing: 29.09.2009
(51) Int. Cl.: B41J 29/15

(54) **Document holder**

(30) Priority: 30.09.2008 NL 1035997
(71) Applicant: Bakker Elkhuizen Innovations B.V., 1327 CB Almere (NL)
(72) Inventor: van Hooft, Johannes Tinus Leonardus, 5331 EG, Kerkdriel (NL); Frencken, Tristan Margareth Raphael Petronella, 5211 EW, 's-Hertogenbosch (NL)
(74) Representative: Hatzmann, Martin

(57) **Abstract**

A document holder (1) for connection with or connected with a screen support (13) for supporting a screen (10) at a distance above a desktop (12) with a supporting structure (2) which has, in operative position, an upward-facing first supporting surface (18) and a downward-facing second supporting surface (19), wherein the upward-facing supporting surface projects forwards with respect to the downward-facing supporting surface. In a first position, the document support (4) abuts against the upward and downward-facing supporting surfaces and the front end (7) of the document support then projects forwards from the supporting surfaces. In a second position, the document support abuts the upward-facing supporting surface, and it is clear of the downward-facing supporting surface and freely pivotable about the upward-facing supporting surface.

## Description

### FIELD AND BACKGROUND OF THE INVENTION

The invention relates to a document holder. For a considerable part, desk work consists of operating a computer by means of a keyboard and an indicator, such as a mouse, taking note of information shown on a screen and paper documents, and writing on paper. In particular when large amounts of data need to be entered in relation to information included in paper documents, it is important that the body is in an ergonomically sound position during consultation of the paper documents. To this end, document holders are known which can be placed on the desktop of the user in front of the screen, so that the document from which information needs to be processed is at some height above the desktop.

It is further known to suspend a screen from a screen support. Via the screen support, the screen is supported without it standing on the desktop. An example of such a screen support is known from US patent publication 5 123 621. This screen support is equipped with a clamp which can be clamped around an edge of the desktop. The screen support is further equipped with a keyboard support which can be pulled out from below the screen towards the user and projects obliquely downwards in pulled-out condition and is supported at a distance above the desktop by the screen support.

From German patent application 196 42 425, a screen support is known whose supporting structure comprises a stand having a base for support with respect to the floor and which is equipped with a keyboard support which is supported by the screen support.

### SUMMARY OF THE INVENTION

It is an object of the invention to provide a simple, flexible solution for, on the one hand, supporting documents in an ergonomically favorable position in an area closely above the desktop during work during which many data are entered and, on the other hand, making this area above the desktop, at least largely, freely accessible during work which mainly consists of paperwork or for the benefit of cleaning the desktop.

This object is achieved according to the invention by providing a document holder according to claim 1. The invention may further be embodied in a screen holder according to claim 10, which is provided with a document holder according to the invention.

The document support can simply be moved between the first position, in which it is kept at a distance above the desktop, and the second position, in which it acts as a holder for supporting, in an ergonomically favorable position, a document which a user needs to consult often and for a long time during data entry.

Because the document holder in the second position is clear of the downward-facing supporting surface and, near the rear end, abuts the upward-facing supporting surface freely pivotably within a particular angle range below the first position, the document holder is operatively supported near the front edge thereof on the desktop. As a result, a supporting facility for keeping the document support in the second position is not necessary and the position of the document support in the second position operatively automatically adapts itself to the height of the desktop with respect to the upward-facing supporting surface. In this manner, a flexibly adjustable document holder can simply be realized which can simply be brought into a position at a distance above the desktop, where it leaves the desktop and an area thereabove clear for laying articles on the desktop or cleaning the desktop.

The invention may further be embodied in a document holder according to claim 6 which can simply be fastened between an existing screen holder and a screen.

Special possible embodiments of the invention are set forth in the dependent claims.

These and other aspects as well as further effects and details relating to the invention are described and explained in the following with reference to the appended drawing.

### BRIEF DESCRIPTION OF THE DRAWING

Fig. 1 is a schematic side elevational view of an example of a document holder according to the invention with a document support in a first position;
Fig. 2 is a schematic side elevational view of the document holder according to Fig. 1 with the document support in a second position;
Fig. 3 is a schematic side elevational view of a second example of a document holder according to the invention with a document support in a third position;
Fig. 4 is a partly cut-away side elevational view of a third example of a document holder and a screen support according to the invention which support a screen and are supported via a desktop;
Fig. 5 is an enlarged view of a part of Fig. 4;
Fig. 6 is a perspective view taken obliquely from below and behind of parts of the document holder and the screen support according to Figs. 4 and 5 as well as the screen according to Fig. 4;
Fig. 7 is a perspective view taken from behind of coupling elements of the document holder and a part of the screen support according to Figs. 4-6, as well as of the screen according to Figs. 4 and 6, during mounting of the clamping elements; and
Fig. 8 is a perspective view taken from behind of coupling elements of the document holder according to Figs. 4-7 in mounted condition, the screen support having been omitted, and of the screen according to Figs. 4, 6 and 7.

### DETAILED DESCRIPTION

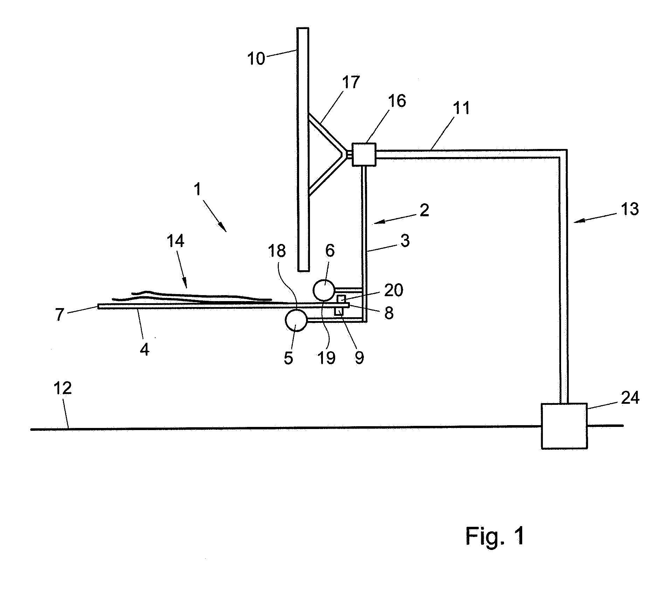

In Fig. 1, an example of a document holder 1 is shown which is coupled via a coupling 16 to an arm 11 of a screen support 13 fastened to a desktop 12. The coupling may, for instance, be a sleeve coupling, a connection between connection parts specifically geared to one another or a fixed connection (i.e. a connection which is not detachable without destruction).

The screen support 13 has a coupling structure 17 at one end of the arm 11, to which a screen 10 is coupled. According to this example, the screen is a flat screen, such as an LCD or OLED screen. At the other end of the arm 11, a base 24 is fastened which is clamped on the desktop 12.

The document holder 1 has a document support 4 with a front end 7 and a rear end 8 operatively remote from the user. The document support 4 is designed as a sheet but may, for instance, also be designed as a lattice or grid. Near the rear end 8, the document support 4 is on an upward-facing first surface 18 of a first supporting part 5 and, from below, it abuts a downward-facing, second supporting surface 19 of a second supporting part 6. According to this example, the supporting parts 5, 6 are designed as plastic profiles which are sufficiently soft to prevent damage of the document support 4 and are sufficiently stiff to realize a solid positioning of the document support 4 in the position shown. The supporting parts 5, 6 are part of a supporting structure 2. An arm 3 of the supporting structure extends from the supporting parts 5, 6 to the coupling 16.

The downward-facing supporting surface 19 is located backwards and higher with respect to the upward-facing supporting surface 18 such that the document support 4 projects approximately horizontally forwards from the supporting parts 5 and 6 when it abuts these supporting surfaces 18, 19. The force exerted by the downward-facing supporting surface 19 on the document support 4 forms, with the force exerted on the upward-facing supporting surface 18 at the location of the bearing, a moment equal and opposite to the moment around the bearing on the upward-facing supporting surface 18, which is exerted by gravitation on the document support 4. The support by the supporting surfaces 18, 19 against the gravitation thus keeps the document support 4 in place.

It is noted that, according to this example, the supporting parts 5, 6 are designed as separate elements, but may also be formed integrally with the arm of the document holder or a part thereof. The distance in horizontal direction between the supporting surfaces 18, 19 is preferably smaller than 15 cm, with an increasing preference for a horizontal distance between the supporting surfaces 18, 19 smaller than 10 cm or smaller than 5 cm, respectively. A distance much smaller than 5 cm entails a relatively high local pressure load and is therefore less preferred.

When a document support 4 is in the substantially horizontal position shown, documents 14 or other objects can be laid thereon and a large space above the desktop 12 is left clear for laying objects thereon or for cleaning the top surface of the desktop 12. In this position, a large working and laying surface is available for general desk work and the like, while it is particularly advantageous that the keyboard and any other input equipment can be placed under the document support 4, so that a part of the desktop is immediately made available to the user for other work. After working hours, the keyboard and any peripheral equipment such as a mouse can be placed on the document support 4, so that the desktop can be cleaned easily and quickly without the keyboard and the other peripheral equipment being in the way.

A stop 20 on the top side of the document support 4 near the rear end 8 of the document support 4 serves as a lock to prevent the document support 4 from being detached from the downward-facing supporting surface 20 in the first position and consequently tilting downwards unintentionally.

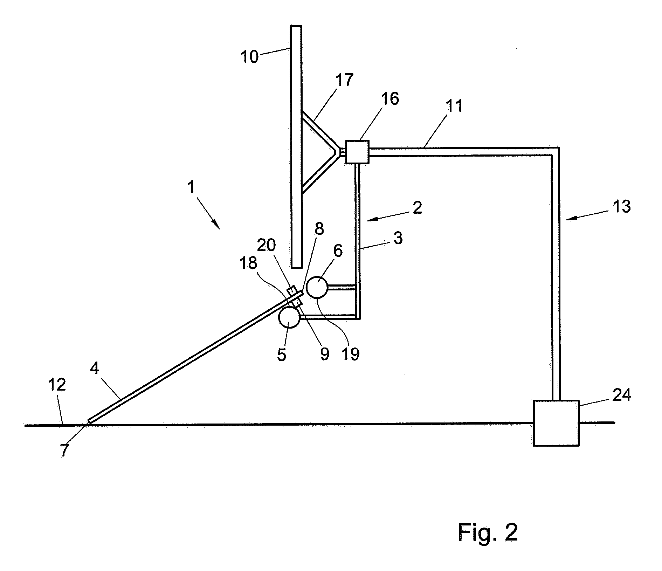

Fig. 2 shows the document support 4 in a second position, in which the document support 4 rests, near the rear end 8 thereof, on the first supporting part 5, is freely pivotable about it and rests, near the front end 7 thereof, on the desktop 12. The document support can simply be brought from the first position to the second position. To this end, starting from the position shown in Fig. 1, the document support 4 needs to be pulled forwards (towards the user), while it is preferably lifted up slightly at the front edge 7 in order to remove or at least reduce the pressure of the supporting surfaces 18, 19 and to cause the stop 20 on the top side of the document support 4 to be clear of the second supporting part 6. If, on the top side of the document support, no stop is present near the rear end, the document support does not need to be lifted up or needs to be lifted up less. By then moving the document support 4 towards the user, the document support 4 becomes clear of the surface 19 faced downwards and it can pivot downwards about the first supporting part 5 until the front edge 7 rests on the desktop 12.

Because, in the second position, the document support 4 rests, near the front end 7 thereof, on the desktop 12 and is freely pivotable about the supporting part 5 on the side of the arm 3, the document support 4 automatically assumes an orientation which matches the vertical distance between the first supporting part 5 and the desktop 12. The angle of the document support 4 with respect to the desktop 12 may, in addition, be influenced by adjusting the height of the supporting parts 5, 6 (for instance by adjusting the height at which the screen is, by adjusting the effective length of the arm 3 from the coupling 16 and/or by adjusting the height of the desktop 12).

According to this example, near the rear edge 8, the document support 4 is provided with a stop 9 which projects downwards behind the upward-facing surface 18. Such a stop 9 projecting downwards prevents the document support 4 from sliding downwards. As a result, the document support 4 is prevented from sliding from the second position from the first supporting surface 18 and the rear end 8 of the document support 4 is prevented from falling down.

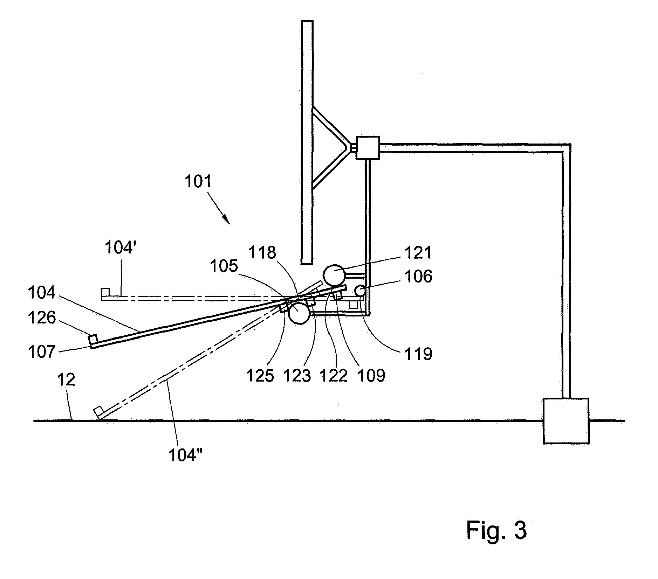

Fig. 3 shows another example of the document holder 101 according to the invention, which forms a variant of the example shown in Figs. 1 and 2. The document holder 101 according to the invention is equipped with a downward-facing, third supporting surface 122 on a bottom side of a third supporting part 121. The downward-facing, third supporting surface 122 is, in operative position, located higher and forwards with respect to the downward-facing second supporting surface 119 on a bottom side of the second supporting part 106 for supporting the document support 104 in a third position between the first and second position 104' and 104", respectively. The downward-facing, third supporting surface 122 is, just like the downward-facing second supporting surface 119, located backwards and higher than the upward-facing first supporting surface 118 on the top side of the first supporting part 105.

The document support 104 of the document holder 101 according to this example can thus simply be moved between two fixed positions 104, 104' and a position 104" depending on the height of the first supporting surface 118 above the desktop 12.

According to this example, the document support 104 is provided with first, second and third stops 109, 123, 125 projecting downwards when the document support 104 is in operative position. When the document support 104 is in the first position 104', the first stop 125 located furthest forwards is located just behind the first supporting part 105, so that the document support 104 cannot unintentionally be moved forwards too easily so that it would be clear of the downward-facing, second supporting surface 119. When the document support 104 is in the second position 104", the second, middle stop 123 is just behind the first supporting part 105, so that the document support 104 cannot unintentionally be moved forwards too easily so that it would be clear of the upward-facing, first supporting surface 118. When the document support 104 is in the third position 104, the third stop 109 located furthest backwards is just behind the first supporting part 105, so that the document support 104 cannot unintentionally be moved forwards too easily so that it would be clear of the downward-facing third supporting surface 122.

In order to prevent documents and other objects from sliding from the document support 104, according to this example, the document support 104 is provided with an upstanding edge 126 near the front end 107 thereof.

The invention as set forth in the following claims is not limited to the exemplary embodiments described herein. Thus, for instance, the document support may be designed without stops or, for detenting the document support in forward direction, other provisions may be made, such as flexible connections or one or more recesses in which one or more projections projecting from the supporting surfaces project. Further, instead of on a horizontal part of the screen support, the supporting structure may also be fastened to the screen support in a different manner.

According to a particularly advantageous embodiment, a part of the document holder to be coupled to the screen support is designed in accordance with a screen, so that it can be fastened to the screen fastening means of the screen support and the coupling has a second part arranged for coupling a screen thereto. Thus, a particularly stable fastening of the document holder can be guaranteed.

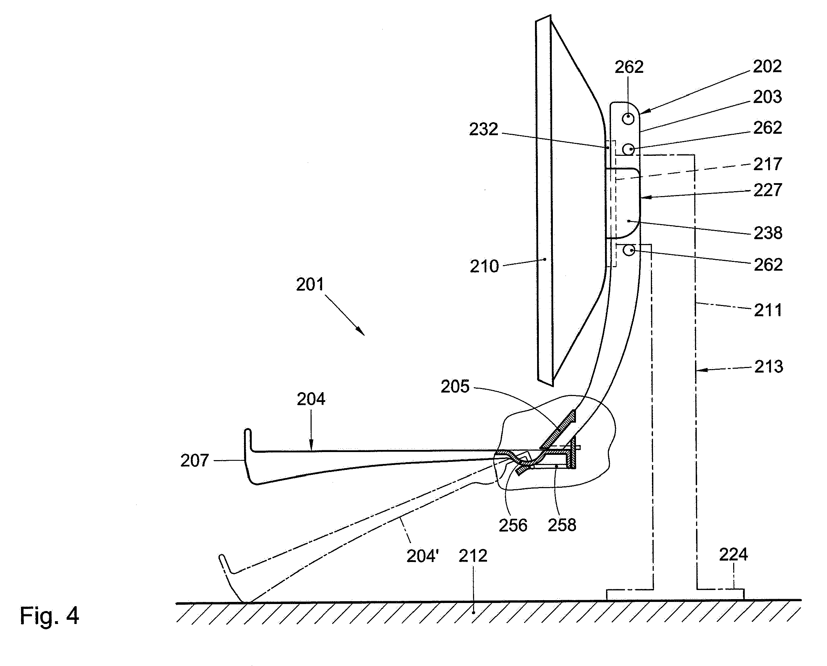

In Figs. 4-8, an example 201 of a document holder according to the invention is shown, whose coupling elements 227, 228 can be fastened between a coupling plate 217 of a screen support 213 and a screen 210 in a very simple manner. The coupling plate 217 according to this example is a coupling plate according to the VESA standard MIS-D which is very common for desk screens, with fastening holes, whose centers form corners of squares of 75x75mm and 100x100mm. Differently dimensioned and designed coupling plates are also applicable within the framework of the invention.

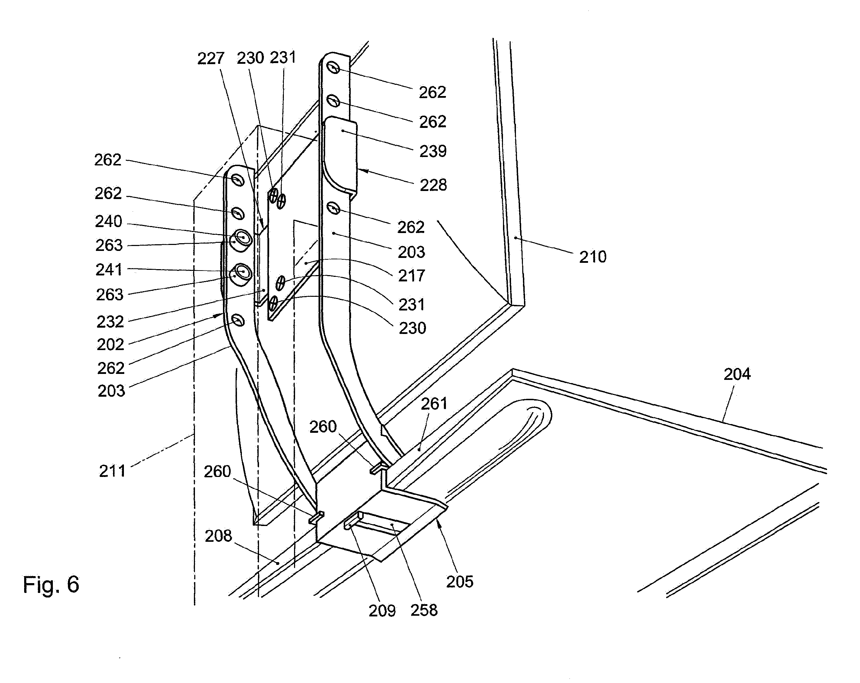

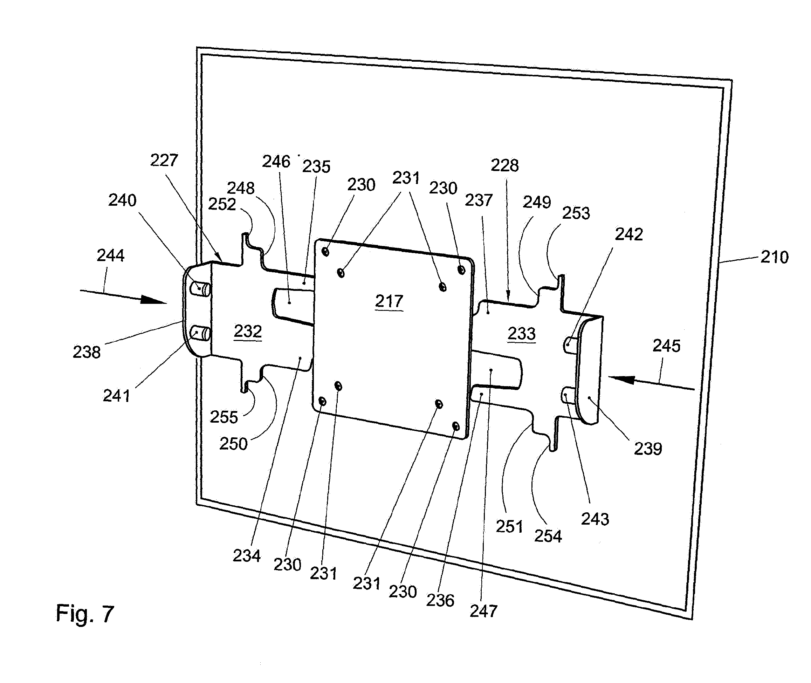

Except for the document holder part 201 thereof, the screen support 213 with an arm 211 and a base 224 which is fastened to a desktop 212 is schematically shown with chain-dotted lines in Figs. 4 and 6. In Fig. 7, of the screen support 213, in addition to coupling elements 227, 228, only the coupling plate 217 and fastening bolts 230 are shown.

The document holder 201 according to the example shown in Figs. 4-8 has a document support 204 with a front end 207 and a rear end 208. In the operative position, a supporting structure 202 in the form of two arms 203 which are interconnected near a bottom end thereof holds the document support 204 near the rear end 208 thereof.

The first supporting surface 218 facing upwards in operative position is, in the document holder 201 according to this example, designed as a surface of a hook element 205 hooked to the arms 203. According to this example, the hook element 205 is designed as section 205 of an aluminum profile, in which a groove 258 is recessed.

The downward-facing second supporting surface is, according to this example, formed by a downward-facing surface 219 of a connection 259 between the two arms 203. Tilting of the hook element 205 under the influence of the moment exerted thereon by the document support 204 is partly prevented in that supporting hooks 260 folded over from the arms 203 hook behind the hook element 205.

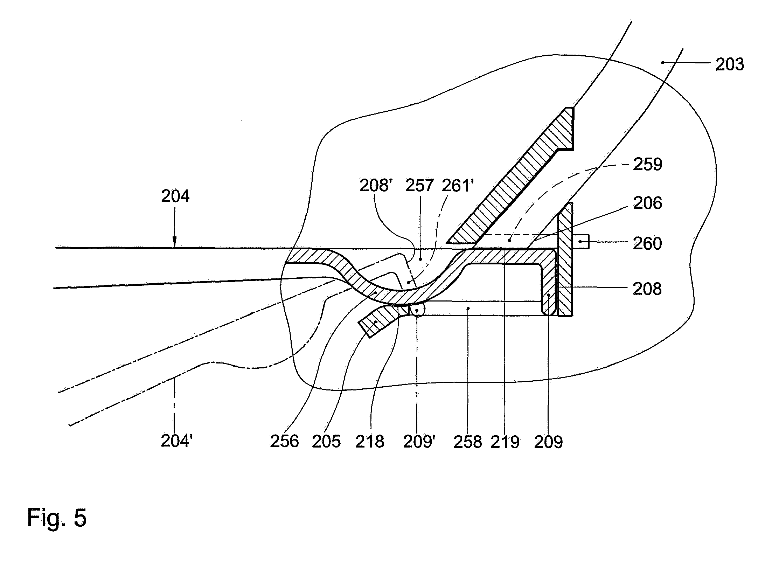

Also with the document holder 201 according to this example, in the first position, the front end 207 of the document support projects forwards from the supporting surfaces 218, 219. In Figs. 4 and 5, the document support is shown in the second position 204' with chain-dotted lines. In this second position, the document support 204' abuts the upward-facing supporting surface 218 with a free edge of a rib 261 projecting downwards along the rear end 208 thereof. Then the document support 204' is clear of the downward-facing supporting surface 219, freely pivotable about the upward-facing supporting surface 218 in an angle range in which the front end 207 is located lower than in the first position and projects forwards from the supporting surfaces 218, 219 in this second position as well.

The stop which projects downwards behind the upward-facing supporting surface 218 when the document support 204' is in the second position is, according to this example, designed as a cam part 209' projecting from the rib 261' along the rear end 208' of the document support 204' (see also cam part 209 in Figs. 5 and 6). Because the cam part 209 projects into the groove 258, it also forms a guide which keeps the document support 204 in a central position with respect to the arms 203 in lateral direction.

As can best be seen Figs. 4-6, the document support 204 is provided with a stiffening profile 256 located above the upward-facing supporting surface 218 if the document support 204 is in the first position. The stiffening profile 256 also forms a recess 257 for laying office supplies in a top surface of the document support 204.

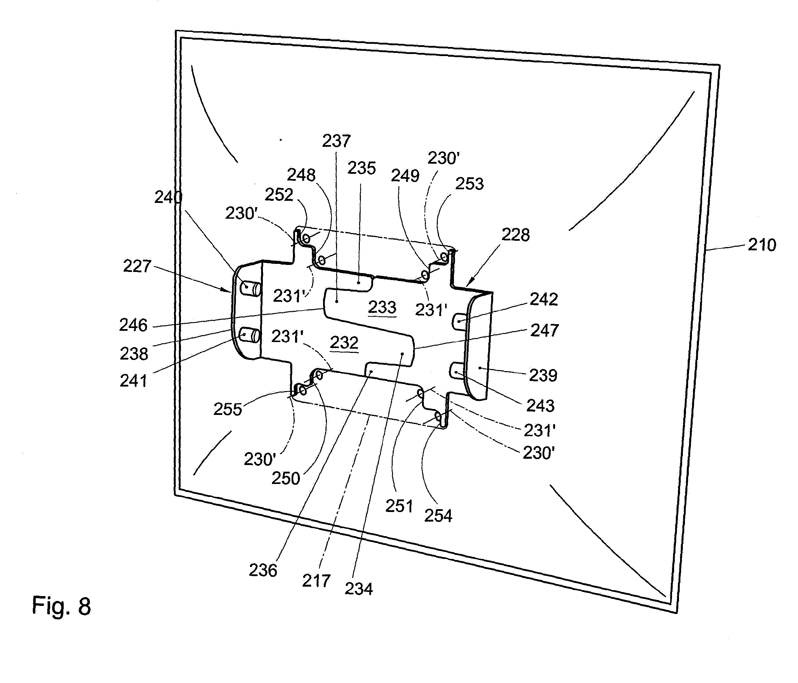

As can most clearly be seen in Figs. 7 and 8, the supporting structure 202 of the document support 201 has two coupling elements 227, 228 each having a plate-shaped coupling part 232, 233 and a fastening part 238, 239 fastened or fastenable to an arm 203 of the supporting structure 202.

The coupling part 232, 233 of each of the coupling elements 227, 228 bounds a recess 246, 247 therein and the coupling part 232, 233 of the other of the coupling elements 227, 228 each time has a tongue part 234, 237 with a shape complementary to the recess 246, 247. When the tongue parts 234, 237 and the recesses 246, 247 interlock, the coupling elements 227, 228 are mutually immobilized against rotation in the plane of the plate-shaped coupling parts 232, 233.

The coupling parts 227, 228 together form a provision to be mounted in a simple manner on which the arms 203 of the supporting structure 202 can be mounted and can easily be brought in a correct mutual position with respect to each other by means of the interlocking tongue parts 234, 237 and recesses 246, 247 by inserting them in directions shown by arrows 244, 245 in Fig. 7 between the coupling plate 217 of the screen support and the screen 210 and bringing them into the position shown in Fig. 8 (in Fig. 8, the area covered by the coupling plate is shown in chain-dotted lines). Prior to this, the bolts 230 with which the coupling plate 217 is fastened to the screen 210 need to be loosened a number of turns. Because the bolts 230 do not need to be loosened completely, the coupling elements 227, 228 can easily be mounted quickly and the bolts 230 are prevented from being lost during mounting.

It is noted that it is possible to provide only one of the coupling elements with a tongue projecting into a recess in the other of the coupling elements and that the shapes of the tongue and the recess may also be shaped so as to be complementary to each other only locally insofar as this is necessary to achieve the intended mutual positioning when inserting one into the other.

Further, the coupling elements 227, 228 each have shoulders 248-254 at a distance from a distal end of the plate-shaped part 232, 233, which shoulders 248-254 are arranged for abutment against the shanks of the bolts 230 with which the coupling plate 217 is fastened to the screen 210. In cooperation with the bolts 231 or with bolts placed in holes 230, the shoulders 248-254 ensure positioning of the coupling elements 227, 228 in the inserting directions 244, 245. Each time, the shoulders 248-254 bound tongue parts 234-237 of the plate-shaped parts 232, 233 which have such a width that they fit precisely between the shanks of the bolts 231 or bolts placed in the holes 230, respectively. The plate-shaped parts thus also ensure positioning of the coupling elements 227, 228 in directions transverse to the inserting directions 244, 245.

The fastening parts 238, 239 of the coupling elements 227, 228 and the arms 203 of the supporting structure 202 have recesses interlocking with one another in coupled condition in the form of holes 262 (see Figs. 4 and 6) and projections in the form of pins 240, the holes 262 and the pins 240 being placed such that they mutually interlock when the coupling elements 227, 228 move towards each other, such that the arms 203 of the supporting structure 202 are fastened to the coupling elements 227, 228. The arms 203 can thus simply be coupled to the coupling elements 227, 228 when the coupling elements 227, 228 slide towards each other in the directions 244, 245. It is also possible to fasten the arms 203 to the coupling elements 227, 228 by slightly bending them towards each other and having them spring back or bending them away from each other as soon as the pins fall in the chosen holes 262. In Fig. 6, in addition, locking rings 263 provided over the pins 240 are shown which prevent the arms 203 from unintentionally becoming detached from the pins 240.

By choosing in which pairs of the holes 262 the pins 240 are inserted, the height of the document support 204 with respect to the coupling plate 217 can be set and can, for instance, be adjusted to the size of the screen 210.

Incidentally, it is noted that a design with, for instance, a single arm and/or pins or differently shaped projections on the arm or arms and recesses in the coupling elements is also possible. Further, the fastening part of each of the coupling elements may have multiple recesses or projections which can selectively be brought into engagement with the projections or recesses of the arm or arms for selectively setting the vertical distance in operative condition between the coupling elements and the document holder.

These and other variants are understood to be within the scope of the invention as set forth in the following claims.

## Claims

1. A document holder for connection with or part of a screen support (13; 213) for supporting a screen (10) at a distance above a desktop (12; 212), comprising:
a document support (4; 104; 204) with a front end (7; 107; 207) proximal to the user in operative position and a rear end (8; 208) remote from the user in operative position; and
a supporting structure (2; 202) which in operative position holds the document support (4; 104; 204) near the rear end (8; 208) thereof;
wherein the supporting structure (2; 202) in operative position has an upward-facing first supporting surface (18; 118; 218) and a downward-facing second supporting surface (19; 119; 219), wherein the upward-facing supporting surface (18; 118; 218) projects forwards with respect to the downward-facing supporting surface (19; 119; 219);
wherein, in a first position, the document support (4; 104; 204) abuts the upward and downward-facing supporting surfaces (18, 19; 118, 119; 218, 219) and the front end (7; 107; 207) projects forwards from the supporting surfaces (18, 19; 118, 119; 218, 219); and
wherein, in a second position, the document support (4; 104; 204) abuts the upward-facing supporting surface (18; 118; 218), is clear of the downward-facing supporting surface (19; 119; 219) and is freely pivotable about the upward-facing supporting surface (18; 118; 218) in at least an angle range in which the front end (7; 107; 207) is located lower than in said first position and projects forwards from the supporting surfaces (18, 19; 118, 119; 218, 219).

2. A document holder according to claim 1, wherein, near the rear edge (8, 208), the document support (4; 104; 204) is provided with a stop (9; 109, 123, 125; 209) which projects downwards behind the upward-facing supporting surface (18; 118; 218) at least when the document support (4; 104; 204) is in the second position.

3. A document holder according to claim 1 or 2, wherein the document support (4) near the rear edge (8) is provided with a stop (20) which projects upwards behind the downward-facing supporting surface (19) at least when the document support (4) is in the first position.

4. A document holder according to any one of the preceding claims, further comprising a downward-facing third supporting surface (122), which, in operative position, is located higher and forwards with respect to the downward-facing second supporting surface (119) for supporting the document support (104) in a third position between the first and the second position.

5. A document holder according to any one of the preceding claims,
wherein the document support (204) is provided with a stiffening profile (256) which is located above the upward-facing supporting surface (218) if the document support (204) is in said first position, wherein said stiffening profile (256) forms a recess (257) for laying office supplies in a top surface of the document support (204).

6. A document holder for connection with a screen support (213) for supporting a screen (210) at a distance above a desktop (212), comprising:
a document support (204) with a front end (207) proximal to the user in operative position and a rear end (208) remote from the user in operative position; and
a supporting structure (202) for holding the document support (204) with respect to the screen support (213) near the rear end (208) of the document support (204);
wherein the supporting structure (202) comprises at least two coupling elements (227, 228), which coupling elements (227, 228) each comprise a plate-shaped coupling part (232, 233) and a fastening part (238, 239) fastened or fastenable to an arm (203) of the supporting structure (202);
wherein the coupling part (232, 233) of at least one of said coupling elements (227, 228) bounds a recess (246, 247),
wherein the coupling part (232, 233) of the other of the coupling elements (227, 228) has a tongue part (234, 237) with a shape at least locally complementary to said recess (246, 247), and
wherein the coupling elements (227, 228), when the at least one tongue part (234, 237) and the at least one recess (246, 247) interlock, are mutually immobilized against rotation in the plane of the plate-shaped coupling parts (232, 233).

7. A document holder according to claim 6, wherein each coupling element (227, 228) has at least one shoulder (248-254) at a distance from a distal end of the plate-shaped part (232, 233), for abutment against a shank of a fastening element (230) which couples a coupling plate (217) to a screen (210).

8. A document holder according to claim 6 or 7, wherein the fastening part (238, 239) of each of the coupling elements (227, 228) and the at least one arm (203) of the supporting structure (202) in coupled condition have recesses and projections interlocking with one another, wherein the recesses and projections are placed such that they mutually interlocking when the coupling elements (227, 228) move towards each other such that the at least one arm (203) of the supporting structure (202) is fastened to the coupling elements (227, 228).

9. A document holder according to claim 8, wherein at least the fastening part (238, 239) of each of the coupling elements (227, 228) or the at least one arm (203) of the supporting structure (202) has multiple recesses or projections which can selectively be brought into engagement with the projections or recesses of said arm (203) or of said coupling elements (227, 228), respectively, for selectively setting the vertical distance in operative condition between the coupling elements (227, 228) and the document holder (204).

10. A screen support comprising a supporting structure (11; 211) and, fastened to the supporting structure: a screen coupling structure (17; 217) arranged for coupling a screen (10; 210) thereto, a base (24, 224) for supporting the supporting structure (11; 211) and a document holder (1; 101; 201) according to any one of the preceding claims.

11. A screen support according to claim 10, wherein the document holder (201) is designed according to any one of claims 6-9 and wherein the plate-shaped parts (232, 233) are arranged for clamping between the screen coupling structure (217) and a screen (210).
